# EUROPÄISCHE PATENTSCHRIFT

(11) **EP 1 247 698 B1**
(45) Veröffentlichungstag und Bekanntmachung des Hinweises auf die Patenterteilung: **08.03.2006**
(21) Anmeldenummer: 01129702.5
(22) Anmeldetag: 13.12.2001
(51) Int. Cl.: B60R 21/01, A41D 13/018

(54) **Vorrichtung zum Schutz eines Fussgängers**
Safety device for a pedestrian
Dispositif pour la sécurité des piétons

(30) Priorität: 06.04.2001 DE 10117083
(43) Veröffentlichungstag der Anmeldung: 09.10.2002
(73) Patentinhaber: ROBERT BOSCH GMBH, 70442 Stuttgart (DE)
(72) Erfinder: Mattes, Bernhard, 74343 Sachsenheim (DE)

(56) Entgegenhaltungen:
- WO-A-98/52433
- DE-A- 4 320 226
- DE-A- 19 846 641
- DE-U- 29 807 171
- US-A- 4 977 623
- US-A- 5 500 952
- US-A- 6 139 050
- PATENT ABSTRACTS OF JAPAN vol. 2000, no. 14, 5. März 2001 (2001-03-05) -& JP 2000 317002 A (JAPAN STEEL WORKS LTD:THE), 21. November 2000 (2000-11-21)
- PATENT ABSTRACTS OF JAPAN vol. 1995, no. 07, 31. August 1995 (1995-08-31) -& JP 07 096049 A (HAZAMA GUMI LTD), 11. April 1995 (1995-04-11)

## Beschreibung

### Stand der Technik

Die Erfindung geht aus von einer Vorrichtung zum Schutz eines Fußgängers nach der Gattung des unabhängigen Patentanspruchs.

Es ist aus der Gebrauchsmusterschrift DE-298 071 71U bekannt, einen Airbag für Motorradfahrer und Fahrradfahrer vorzusehen. Dabei ist ein Gasgenerator auf dem Fahrrad bzw. Motorrad angebracht.

Aus US-A4,977,623, die als nächstliegender Stand der Technik betrachtet wird, ist eine Weste bekannt, die ein aufblasbaren Airbag aufweist. Sensoren sind vorhanden, um einen Crash oder eine starke Abbremsung zu detektieren. Eine Signalverarbeitung für diese Aufprallsensoren ist vorgesehen. In Abhängigkeit von der Signalverarbeitung werden Zündmittel angesteuert.

### Vorteile der Erfindung

Die erfindungsgemäße Vorrichtung zum Schutz eines Fußgängers mit den Merkmalen des unabhängigen Patentanspruchs hat dem gegenüber den Vorteil, dass auch für einen Fußgänger eine Airbagvorrichtung zur Verfügung steht. Dies ist insbesondere für Personen ab ungefähr 50 Jahre von Vorteil, da diese Personen bei einem Sturz eine hohe Wahrscheinlichkeit aufweisen, dass sie eine Knochenfraktur, beispielsweise eine Oberschenkel-, Oberschenkelhals-, Becken-, Steißbein-, Lendenwirbel oder andere Brüche am Bewegungsapparat erleiden. Dies kann vorteilhafterweise durch die erfindungsgemäße Vorrichtung vermieden oder zumindest in seiner Schwere erheblich gemindert werden. Dies führt dann zu einer höheren Sicherheit von älteren und gefährdeten Menschen und damit zu geringeren Belastungen des Gesundheitssystems. Die erfindungsgemäße Vorrichtung ist jedoch auch für Bergsteiger und Bergwanderer von Nutzen und kann so auch bei möglichen Unfällen die Schwere einer Verletzung erheblich mindern, wenn nicht gar die Verletzung selbst verhindern. Vorteilhafterweise wird für die erfindungsgemäße Vorrichtung ein Kaltgasgenerator verwendet, da die Ausströmungsgastemperatur eines Kaltgasgenerators in etwa der Umgebungslufttemperatur entspricht. Der Kaltgasgenerator besteht beispielsweise aus einer Stahlflasche als Druckbehälter, die mit dem Edelgas Argon oder mit Helium unter Hochdruck teilweise bis zu 600 Bar gefüllt ist und dann pyrotechnisch mittels eines Durchschießens einer Verschlussmembran oder eines seitlichen Wegbewegens einer Verschlussblende geöffnet wird.

In den abhängigen Ansprüchen sind vorteilhafte Weiterbildungen und Verbesserungen der im unabhängigen Patentanspruch angegebenen Vorrichtung zum Schutz eines Fußgängers angegeben.

Besonders vorteilhaft ist, dass die erfindungsgemäße Vorrichtung als Gürtel ausgebildet ist, so dass die erfindungsgemäße Vorrichtung beispielsweise um die Hüften getragen werden kann, wobei eine Breite von circa 10 cm und eine maximale Dicke von 3 cm anzustreben sind. Ein solcher Bauchgürtel soll dann durch einen ausgelösten Airbag bei einem Sturz seinen Träger gegen die auf-Hüfte, Gesäß, Wirbelsäule und andere Knochen auftretenden Belastungen abfedern, so dass Knochenfrakturen vermieden werden. Insbesondere soll der Gassack auch vor Gewebeverletzungen durch Stürze auf spitze oder kantige Gegenstände schützen.

Darüber hinaus ist es von Vorteil, dass die erfindungsgemäße Vorrichtung eine Ladeschaltung und einen Energiespeicher aufweist, so dass die erfindungsgemäße Vorrichtung beispielsweise für einen ganzen Tag von seinem Träger getragen werden kann, um dann abends wieder durch einen Anschluss an das verfügbare Stromnetz aufgeladen zu werden. Dabei sollte der Energiespeicher vorteilhafterweise als ein wieder aufladbarer Speicher mit hoher Leistungsdichte ausgeführt sein, wie es beispielsweise Doppelschichtkondensatoren nach dem Maxwell-Prinzip sind. Solche Energiespeicher können innerhalb von 15 Sec durch Anschluß an das Stromnetz wieder aufgeladen werden. Die Elektronik ist dann so aufzuführen, dass sie für circa 15 Stunden am Stück versorgt werden kann.

Weiterhin ist es von Vorteil, dass die meisten elektronischen Komponenten der erfindungsgemäßen Vorrichtung auf einer flexiblen Leiterplatte angeordnet sind, die dann einfach in den Gürtel integrierbar ist, so dass die erfindungsgemäße Vorrichtung von einer Person bequem getragen werden kann.

Es ist weiterhin von Vorteil, dass der Aufprallsensor als Beschleunigungssensor ausgebildet ist, wobei dieser Beschleunigungssensor erlauben soll, sowohl Beschleunigungen in horizontaler Richtung, die beim Fahren mit einem Kraftfahrzeug oder einem Flugzeug auftreten, als auch die in vertikaler Richtung, die beispielsweise bei einem Sturz auftreten, zu messen. Durch einen geeigneten Auslösealgorithmus im Prozessor sollen dann nur solche Auslöseereignisse erkannt werden, die eindeutig auf einen Sturz hinweisen. Das sind dann insbesondere hohe Beschleunigungen in vertikaler Richtung. Ein Auslösealgorithmus beispielsweise mit adaptiver Schwelle kann hierfür verwendet werden, wobei ausführliche Tests zur Parameterbestimmung notwendig sind. Dabei ist es weiterhin möglich, auch integrierte Beschleunigungssignale, d.h. Geschwindigkeitssignale, auszuwerten.

Die Verwendung einer flexiblen Leiterplatte ist insbesondere für eine Verwendung für einen Fußgänger von Vorteil, da dann die erfindungsgemäße Vorrichtung leicht in einen Gürtel integriert werden kann, der bequem tragbar ist.

### Zeichnung

Ausführungsbeispiele der Erfindung sind in der Zeichnung dargestellt und werden in der nachfolgenden Beschreibung näher erläutert.
Figur 1 zeigt die erfindungsgemäße Vorrichtung schematisch als Gürtel mit Gürtelschloß und
Figur 2 ein Blockschaltbild der erfindungsgemäßen Vorrichtung.

### Beschreibung

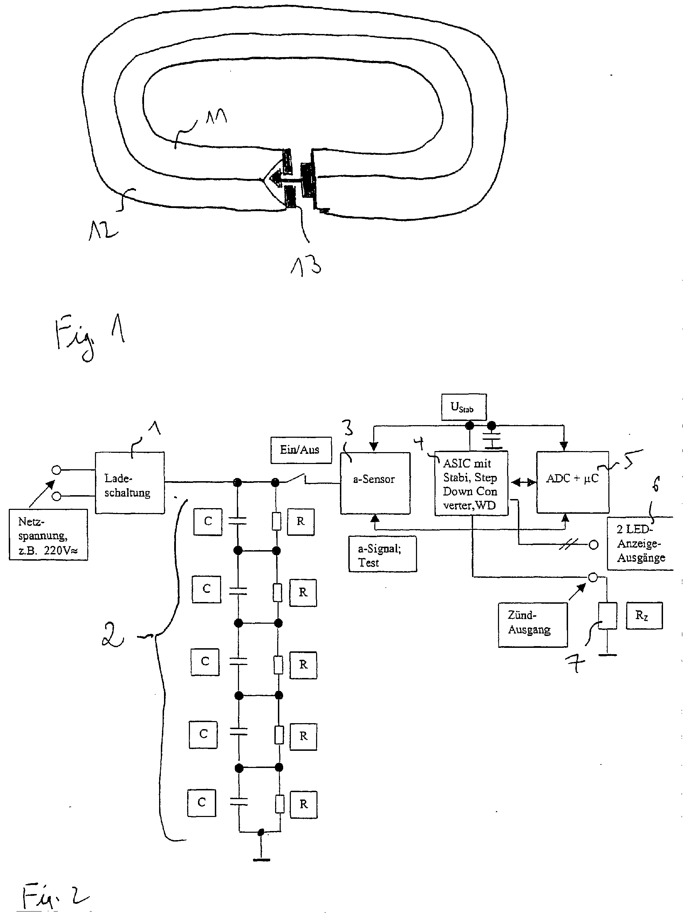

Figur 1 zeigt die erfindungsgemäße Vorrichtung als einen Gürtel. Ein Elektronikbereich 11, in dem ein Aufprallsensor, ein Kaltgasgenerator, Zündmittel und ein Prozessor angeordnet sind und ein Luftsackbereich 12 sind Komponenten der erfindungsgemäßen Vorrichtung und hier damit des Gürtels. Ein lösbares Gürtelschloß 13 dient zum Anschnallen des Gürtels. Der Luftsackbereich 12, der also den eigentlichen Airbag darstellt, ist am Gürtel außen angeordnet, während der Elektronikbereich 11 innen angeordnet ist. Der Elektronikbereich 11 zeichnet sich vor allem dadurch auch, dass die Mehrheit der elektrischen und elektronischen Komponenten auf einer flexiblen Leiterplatte angeordnet sind. Dies ist insbesondere für die Verwendung in einem Gürtel oder einer anderen am Körper eines Menschen getragenen Vorrichtung von Vorteil, da sich eine flexible Leiterplatte einer Vielzahl von Formen anpassen kann.

Kommt es zu einem Sturz einer den Gürtel tragenden Person, dann wird im Elektronikbereich 11 ein Zündmittel gezündet, das den Airbag, bzw. Luftsack im Luftsackbereich 12 zum Expandieren bringt, um damit den Träger des erfindungsgemäßen Gürtels bei einem Sturz zu schützen. Der Luftsackbereich 12 kann auch in Segmente aufgeteilt werden, so dass nicht der komplette Umfang für einen oder mehreren Luftsäcke vorgesehen sein muss. Im Elektronikbereich 11 sind weitere Einrichtungen vorgesehen, die zur elektrischen Energieversorgung der erfindungsgemäßen Vorrichtung dienen. Dazu gehört ein Netzspannungsanschluss, eine Ladeschaltung und ein Energiespeicher. Weiterhin weist die erfindungsgemäße Vorrichtung eine Anzeige auf, um beispielsweise anzuzeigen, dass ein Wiederaufladen der erfindungsgemäßen Vorrichtung notwendig ist. Auch der Betriebszustand und eine eventuelle Fehlfunktion können so angezeigt werden.

Figur 2 zeigt nun als Blockschaltbild die erfindungsgemäße Vorrichtung und hierbei insbesondere den Elektronikteil 11. Eine Ladeschaltung 1 dient zum Anschluss an eine Netzspannung, beispielsweise 220 oder 110 V. An die Ladeschaltung 1 ist ein Energiespeicher 2 angeschlossen, der aus Kondensatoren und parallel geschalteten Symmetrierwiderständen besteht. Durch eine Reihenschaltung der RC-Parallelschaltung ist eine Bestimmung der Energiekapazität möglich. Hier sind fünf RC-Schaltungen hintereinander geschaltet. Sie sind dann gegen Masse letztlich geschaltet.

Nach dem Energiespeicher 2 folgt ein Schalter der hier mit Ein/Aus bezeichnet wird, um die Energie zum Elektronikbereich der erfindungsgemäßen Vorrichtung zuzuschalten. Beim Wiederaufladen des Energiespeichers 2 bzw. einer Fehlfunktion des Elektronikteils 11 ist dieser Schalter geöffnet. Im normalen Betrieb, also wenn eine Person die erfindungsgemäße Vorrichtung trägt, dann ist dieser Schalter geschlossen, um die nachfolgende Elektronik mit elektrischer Energie zu versorgen. Der Schalter wird entweder automatisch geschaltet, beispielsweise beim Schließen des Gürtels, oder manuell, um die erfindungsgemäße Vorrichtung zu aktivieren oder deaktivieren. Die Funktionsbereitschaft des Elektronikteils 11 wird über die Anzeige 6 optisch angezeigt.

An den Schalter ist ein Beschleunigungssensor 3 angeschlossen, der zur Messung von Beschleunigung in horizontaler und vertikaler Richtung, also auch in Sturzrichtung dient. Bei Betriebsbeginn wird von einem mit einem Datenein-/-ausgang verbundenen Mikrocontrollers 5 ein Test des Beschleunigungssensors 3 vorgenommen. Außer einem Mikrocontroller 5 sind auch andere Prozessortypen einsetzbar. Über eine Energieversorgungsleitung UStab ist der Beschleunigungssensor 3 und der Prozessor 5 mit einem ASIC 4 verbunden, der die Aufgabe hat, die Versorgungsspannung zu stabilisieren. Dieser ASIC 4 ist weiterhin mit einer Anzeige 6 verbunden, die zur Funktionsfähigkeitsanzeige und zur Anzeige des Energievorrats dient. Über einen weiteren Ausgang ist der ASIC 4 mit einem Zündmittel 7 verbunden, um im Auslösefall, durch den Prozessor 5 geschaltet, über einen zweiten Datenein-/-ausgang die Zündenergie auf das Zündmittel 7 zu schalten. Damit wird dann der Luftsack 12 ausgelöst, um expandiert zu werden und zum Schutz des Fußgängers zu dienen. Der Begriff Airbag bezeichnet hier den Luftsack mit Abdeckung und integrierter Reißnaht.

Der Auslösealgorithmus, der im Prozessor 5 abläuft, trennt Nichtauslöser von Auslösern. Nichtauslöser liegen insbesondere bei hohen horizontalen Beschleunigungen vor, wie sie in Fahrzeugen oder Flugzeugen vorkommen. Der Aufprallsensor 3 muß also in x-Richtung (horizontal) und in z-Richtung sensieren. Es ist weiterhin denkbar, dass der Aufprallsensor auch in y-Richtung sensiert, um auch bei einem Fallen zur Seite eine Plausibilität mit der Beschleunigung in z-Richtung herzustellen. Alternativ ist es möglich, einen Drehratensensor einzusetzen, auch in Kombination mit einem Beschleunigungsensor, da ein Fußgänger bei einem Sturz meist eine Drehbewegung ausführt.

Der Gürtel muss einen geeigneten verstellbaren, lösbaren Verschluß 13, der bei der Airbagauslösung nicht aufgeht, d.h. der Gurt muss den umlaufenden Airbag 12 am Körper halten.

Im Folgenden soll ein Dimensionierungsbeispiel für die erfindungsgemäße Vorrichtung angegeben werden. Die Kondensatoren C sollen 900 F bei 2,3 V aufweisen. Damit würde die Gesamtkapazität der Kondensatorenbatterie 180 F betragen. Diese werden auf eine Nennspannung von 11,5 V aufgeladen. Als UStab wird eine Spannung von 3,3 V bei einem Stromverbrauch von 20 mA angegeben. Der Symmetrierwiderstand R, der parallel zu C geschaltet ist, ist hier mit 47 kΩ angegeben. Der Wirkungsgrad des Abwärtswandlers beträgt 80%. Die verfügbare gespeicherte Energie ist 8,4 kJ. Daraus ergibt sich dann eine unterbrechungsfreie Betriebsdauer des Gürtels von knapp 15 ½ Stunden. Die Aufladezeit eines total entladenen Energiespeichers 2 mit der Ladeschaltung 1 beträgt hier 15,3 Sec. Als Beschleunigungssensor 3 wird ein Low g- Tiltsensor nach thermischen Prinzip verwendet. Das Zündelement 7 RZ soll einen Widerstand von 2,15 Ω, eine Zündenergie von 3,7 mJ in 2 ms aufweisen. Dies entspricht damit einem Gurtstraffer-Zünder. Der ASIC 4 soll die 3,3 V stabilisierte Spannung abgeben und als Hardware-Watchdog dienen, als Abwärtswandler funktionieren und eine einseitige Zündstufe für das Zündmittel 7 enthalten. Des weiteren sind die zwei LED-Ausgänge für Funktionszustand grün bzw. Fehleranzeige rot vorgesehen. Darüber hinaus weist der ASIC 4 Diagnoseschaltungen für Zündkreis, Energiespeicherspannung, stabilisierte Spannung und LED-Ausgänge, usw. auf. Es handelt sich also hierbei um die Airbag-Elektronik-typischen Diagnosefunktionen. Als Prozessor wird ein 8 Bit- Microcontroller mit einem Analog Digital Converter verwendet.

## Patentansprüche

1. Vorrichtung zum Schutz eines Fußgängers, wobei die Vorrichtung einen Airbag (12), einen Aufprallsensor (3), ein Zündmittel (7), einen Prozessor (5) zur Verarbeitung von Signalen des Aufprallsensors (3) und zur Ansteuerung des Zündmittels (7) angeordnet ist, **dadurch gekennzeichnet, dass** die Anordnung einen Kaltgasgenerator (11) aufweist und dass die elektronischen Komponenten der Vorrichtung vorwiegend auf einer flexiblen Leiterplatte angeordnet sind.

2. Vorrichtung nach Anspruch 1, **dadurch gekennzeichnet, dass** die Vorrichtung als Gürtel ausgebildet ist.

3. Vorrichtung nach Anspruch 1 oder 2, **dadurch gekennzeichnet, dass** die Vorrichtung eine Ladeschaltung (I) und einen Energiespeicher (2) aufweist.

4. Vorrichtung nach Anspruch 3, **dadurch gekennzeichnet, dass** die Ladeschaltung (I) an eine Netzspannung anschließbar ist.

5. Vorrichtung nach einem der vorhergehenden Ansprüche, **dadurch gekennzeichnet, dass** der Aufprallsensor (3) als Beschleunigungssensor ausgebildet ist.

6. Vorrichtung nach Anspruch 5, **dadurch gekennzeichnet, dass** mit dem Beschleunigungssensor (3) Beschleunigung in horizontaler als auch vertikaler Richtung unterscheidbar sind.

## Claims

1. Apparatus for protecting a pedestrian, with the apparatus having an airbag (12), an impact sensor (3), a firing means (7) and a processor (5) for processing signals from the impact sensor (3) and for actuating the firing means (7), **characterized in that** the arrangement has a cold-gas generator (11), and **in that** the electronic components of the apparatus are predominantly arranged on a flexible printed circuit.

2. Apparatus according to Claim 1, **characterized in that** the apparatus is in the form of a belt.

3. Apparatus according to Claim 1 or 2, **characterized in that** the apparatus has a charging circuit (1) and an energy store (2).

4. Apparatus according to Claim 3, **characterized in that** the charging circuit (1) can be connected to a mains voltage.

5. Apparatus according to one of the preceding claims, **characterized in that** the impact sensor (3) is in the form of an acceleration sensor.

6. Apparatus according to Claim 5, **characterized in that** the acceleration sensor (3) can distinguish between acceleration in the horizontal and the vertical directions.

## Revendications

1. Dispositif pour la sécurité des piétons, comportant un coussin gonflable de sécurité (12), un capteur de choc (3), un moyen de déclenchement (7), un processeur (5) pour traiter les signaux du capteur de choc (3) et pour commander le moyen de déclenchement (7),
**caractérisé en ce que**
le dispositif présente un générateur de gaz froids (11), et les composants électroniques du dispositif sont essentiellement disposés sur une carte de circuit imprimé flexible.

2. Dispositif selon la revendication 1,
**caractérisé en ce que**
le dispositif est une ceinture.

3. Dispositif selon la revendication 1 ou 2,
**caractérisé en ce que**
le dispositif présente un circuit de charge (1) et un accumulateur (2).

4. Dispositif selon la revendication 3,
**caractérisé en ce que**
le circuit de charge (1) peut être connecté à une tension du secteur.

5. Dispositif selon l'une quelconque des revendications précédentes,
**caractérisé en ce que**
le capteur de choc (3) est un capteur d'accélération.

6. Dispositif selon la revendication 5,
**caractérisé en ce qu'**
avec le capteur d'accélération (3), on peut différencier, les accélérations dans les directions horizontale et verticale.
